(19) Europäisches Patentamt
European Patent Office
Office européen des brevets

(11) **EP 1 840 433 A1**

(12) **EUROPEAN PATENT APPLICATION**

(43) Date of publication:
**03.10.2007 Bulletin 2007/40**

(51) Int Cl.:
*F16L 9/12* (2006.01)    *B32B 1/08* (2006.01)
*C08L 27/16* (2006.01)

(21) Application number: **07006419.1**

(22) Date of filing: **28.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.03.2006 JP 2006092060**
**16.02.2007 JP 2007035779**

(71) Applicants:
• **TOHOKU UNIVERSITY**
  **Sendai-shi, Miyagi (JP)**
• **NICHIAS CORPORATION**
  **Tokyo (JP)**

(72) Inventors:
• **Ohmi, Tadahiro**
  **Sendai-shi,**
  **Miyagi (JP)**

• **Teramoto, Akinobu**
  **Sendai-shi,**
  **Miyagi (JP)**
• **Yamanaka, Jiro**
  **Sendai-shi,**
  **Miyagi (JP)**
• **Iwahara, Kengo**
  **Yokohama-shi,**
  **Kanagawa (JP)**
• **Fukae, Kouji**
  **Yokohama-shi,**
  **Kanagawa (JP)**

(74) Representative: **Glawe, Delfs, Moll**
  **Patentanwälte**
  **Postfach 26 01 62**
  **80058 München (DE)**

(54) **Resin pipe and pipe material**

(57) In a resin pipe, PVDF (12) being a fluororesin is softened by adding a perfluoromonomer thereto, so that the oxygen permeability can be significantly reduced. The oxygen permeability can also be reduced by providing a nylon tube as an outer layer (14).

FIG. 2

EP 1 840 433 A1

**Description**

Background of the Invention:

This invention relates to a resin pipe and a pipe material suitable for use in the transport line for a liquid such as ultrapure water (UPW) or a chemical solution.

Generally, on manufacturing semiconductor devices, liquid crystal display devices, or the like, ultrapure water (UPW) (including ultrapure water containing hydrogen or ozone, i.e. so-called hydrogen water or ozone water) is often transported and supplied through resin pipes in addition to various chemical solutions and so on. If a large amount of oxygen is contained, in the form of dissolved oxygen, in water used in a cleaning process or the like, a natural oxide film is formed due to the dissolved oxygen. Therefore, ultrapure water is used on manufacturing semiconductor devices or the like. Recently, however, it has been pointed out that even if ultrapure water is used, a natural oxide film is likewise formed, and therefore, it has been attempted to thoroughly remove oxygen, particles, and metal components contained in ultrapure water.

For example, on fabricating a semiconductor device using a silicon substrate, a natural oxide ($SiO_x$) film is formed on the silicon surface if oxygen and water coexist. Particularly, it has been pointed out that if oxygen is contained in an aqueous solution, the silicon surface is oxidized and further etched, resulting in an increase in surface microroughness.

In recent years, attention has been paid to the use of (110) crystal surface of silicon, because of a larger current-driving capability for a PMOSFET as compared with the (100) crystal surface of silicon. However, the (110) crystal surface of silicon is etched more severely in an aqueous solution as compared with the (100) crystal surface of silicon, for the reason that oxygen is present in the aqueous solution. Accordingly, it is necessary to prevent the incorporation of oxygen into the aqueous solution when the Si surface is cleaned by wet cleaning using such an aqueous solution.

It has been pointed out that the incorporation of oxygen into an aqueous solution occurs not only during treatment such as cleaning, but also through resin pipes constituting the transport lines for ultrapure water, chemical solutions, and so on. In order to reduce the incorporation of oxygen in the transport lines, Japanese Unexamined Patent Application Publication (JP-A) No. 2004-322387 (Patent Document 1) discloses a tube comprising a tube body and a heat-shrinkable belt-like film made of a resin adapted to suppress permeation of gas, wherein the belt-like film is helically wound around the tube body such that portions of the film overlap each other.

Further, Patent Document 1 describes heating the wound belt-like film in a vacuum atmosphere at a temperature lower than a melting point of the film, thereby thermally shrinking and fusion-bonding the wound belt-like film to remove air existing between the overlapping portions of the wound film. Patent Document 1 further describes using, as the tube body, a fluororesin such as a tetrafluoroethylene-perfluoroalkylvinylether copolymer (PFA) resin, a polytetrafluoroethylene (PTFE) resin, or a tetrafluoroethylene-hexafluoropropylene copolymer (FEP) resin, Patent Document 1 further describes using, as the belt-like film, polyvinylidene chloride having a low gas permeability and having thermal shrinkage properties. In this manner, by forming a gas permeation preventing outer coating layer using the belt-like film, it is possible to prevent permeation of gas through the outer coating layer and thus to prevent the gas from dissolving into ultrapure ware or a chemical solution flowing in the tube.

On the other hand, Japanese Unexamined Patent Application Publication (JP-A) No. 2006-112507 (Patent Document 2) discloses, as a pipe for use in a semiconductor manufacturing apparatus, a liquid crystal manufacturing apparatus, or the like, a fluororesin double tube in which two kinds of fluororesins are stacked in two layers. The fluororesin double tube disclosed in Patent Document 2 comprises an inner layer tube and an outer layer tube, wherein the inner layer tube is made of a fluororesin excellent in corrosion resistance and chemical resistance (e.g. a tetrafluoroethylene-perfluoroalkylvinylether copolymer (PFA), a tetrafluoroethylene-hexafluoropropylene copolymer (FEP), or a tetrafluoroethylene-ethylene copolymer (ETFE)), while, the outer layer tube is made of a fluororesin capable of suppressing permeation of gas (e.g. polyvinylidene fluoride (PVDF)), and the inner layer tube and the outer layer tube are fusion-bonded together.

The fluororesin double tube disclosed in Patent Document 2 has an advantage that it has the excellent corrosion resistance, chemical resistance, and gas permeation preventing properties and, further, the inner layer tube and the outer layer tube can be firmly joined together.

Patent Document 1 describes that the piping is carried out using the disclosed tube, the dissolved oxygen amount in ultrapure water flowing in the tube is measured by a dissolved oxygen meter, and the dissolved oxygen amount can be reduced to 3.5ppb.

On the other hand, Patent Document 2 discloses the fluororesin double tube in which the peel strength between the inner layer tube and the outer layer tube is 3.0N/m or more. Further, Patent Document 2 defines an oxygen permeability and an oxygen permeability coefficient and points out that the oxygen permeability and the oxygen permeability coefficient can be reduced. Herein, Patent Document 2 defines, as the oxygen permeability, an oxygen permeability per 24 hours (day) (grams/24hr), while, defines, as the oxygen permeability coefficient, a coefficient given by (grams · mil/100in² · 24hr · atm). That is, the oxygen permeability and the oxygen permeability coefficient are given by the following formulas (1) and (2), respectively,

$$\text{Oxygen Permeability (grams/24hr)}$$

$$= \text{(Dissolved Gas Concentration (g/l)} \times$$

$$\text{Volume in Tube (l) / Residence Time in Tube (24hr)} \quad (1)$$

$$\text{Oxygen Permeability Coefficient (grams} \cdot \text{mil/100in}^2 \cdot \text{24hr} \cdot \text{atm})$$

$$= \text{(Oxygen Permeability} \times \text{Tube Wall Thickness (mil)) /}$$

$$\text{(Tube Surface Area (100in}^2\text{)} \times \text{Gas Differential Pressure (atm))}$$

$$(2)$$

Patent Document 2 describes that the fluororesin double tube having a PFA layer and a PVDF layer as the inner layer tube and the outer layer tube, respectively, exhibits an oxygen permeability coefficient of 0.135 (grams · mil/ 100in$^2$ · 24hr · atm) when no hydrophilic treatment is applied between both layers, while, exhibits an oxygen permeability coefficient of 0.025 (grams · mil/100in$^2$ · 24hr · atm) when the hydrophilic treatment is applied between both layers. Since the oxygen permeability coefficient is 1.300 (grams · mil/100in$^2$ · 24hr · atm) in the case of a PFA layer alone, the fluororesin double tube disclosed in Patent Document 2 can significantly reduce the oxygen permeability coefficient.

On the other hand, the dissolved oxygen amount allowed during cleaning is 10ppb or less in a recent semiconductor manufacturing apparatus, liquid crystal manufacturing apparatus, or the like and, for enabling it, the oxygen permeability coefficient is required to be $5 \times 10^6$ (molecules · cm/cm$^2$ . sec · Pa) or less.

However, using the tube disclosed in Patent Document 1, the dissolved oxygen amount cannot be set to 3.5ppb or less, much less 1 ppb or less. On the other hand, using the technique described in Patent Document 2, the required oxygen permeability coefficient cannot be accomplished even if the hydrophilic treatment is applied to the inner layer tube. In other words, in order to achieve the oxygen permeability coefficient of 0.025 (grams · mil/100in$^2$ · 24hr · atm) in Patent Document 2, it is necessary to perform a hydrophilic treatment of, for example, preparing a mixed liquid of metal sodium, naphthalene, and THF (tetrahydrofuran), then, after immersing the inner layer tube in the mixed liquid, removing the naphthalene by methanol cleaning, and then removing sodium fluoride by rinsing. Therefore, according to the technique of Patent Document 2, there is a drawback that the complicated operation is required for obtaining a tube having the required oxygen permeation properties and, further, since the PVDF used for forming the outer layer tube is not flexible, the piping is difficult.

The PVDF provides a low oxygen permeability coefficient even if it is used as a single layer, but its flexural modulus is 2000Mpa and therefore it is too hard for the piping and thus cannot be practically used.

Summary of the Invention:

It is therefore an object of this invention to provide a pipe that has an oxygen permeability coefficient of $5 \times 10^6$ (molecules · cm/cm$^2$ · sec · Pa) or less so as to achieve a dissolved oxygen amount of 10ppb or less and further that is flexible.

It is another object of this invention to provide a pipe using a fluororesin, which can achieve a required dissolved oxygen amount, oxygen permeability coefficient, and flexural modulus.

It is still another object of this invention to provide a pipe made of a fluororesin that is flexible.

According to a first mode of this invention, there is obtained a resin pipe having an oxygen permeability coefficient of $5 \times 10^6$ (molecules · cm/cm$^2$ · sec · Pa) or less and a flexural modulus of 1800Mpa or less and containing a fluororesin.

According to a second mode of this invention, there is obtained a resin pipe wherein a surface of the resin pipe has resistance to one of an alkaline aqueous solution, an acidic aqueous solution, a neutral aqueous solution, and an organic solvent.

According to a third mode of this invention, there is obtained a resin pipe formed of two or more kinds of materials having different compositions.

According to a fourth mode of this invention, there is obtained a resin pipe which comprises a layer of softened PVDF or a nylon layer.

According to a fifth mode of this invention, there is obtained a resin pipe wherein the oxygen permeability coefficient is $2 \times 10^6$ (molecules $\cdot$ cm/cm$^2$ $\cdot$ sec $\cdot$ Pa) or less.

According to a sixth mode of this invention, there is obtained a resin pipe containing a layer of softened PVDF or nylon and a layer of one of ETFE, PTFE, PVDC, FEP, and PFA.

Currently, a PFA tube having a flexural modulus of 600Mpa is often used in a chemical solution supply system, but oxygen molecules that permeate the PFA tube are about $1.56 \times 10^7$ (molecules $\cdot$ cm/cm$^2$ $\cdot$ sec $\cdot$ Pa) and it is not possible to achieve the order of $10^6$.

In this invention, it is possible to realize a resin pipe that can reduce an oxygen concentration in an aqueous solution to about the order of $10^6$ in terms of the number of oxygen molecules.

According to this invention, by optimizing the composition/structure of a resin material, there is formed a pipe having resistance to an aqueous solution/non-aqueous solution to be supplied and, further, allowing only a small permeability of oxygen (gas). Therefore, in this invention, it is possible to form a pipe with a very small amount of gas permeation and thus to realize a resin pipe adapted to transport a liquid such as a chemical solution or ultrapure water with a low concentration of gas, particularly oxygen.

This makes it possible not only to suppress permeation of $O_2$, $CO_2$, or the like from atmospheric air, but also to suppress permeation of hydrogen from hydrogen water to the exterior of a pipe or permeation of gas from hydrochloric acid, fluoric acid, or the like to the exterior of a pipe.

Brief Description of the Drawings:

Fig. 1 is a schematic perspective view showing a tube according to a first embodiment of this invention;
Fig. 2 is a sectional view for explaining a tube according to a second embodiment of this invention;
Fig. 3 is a diagram showing a measurement system for measuring properties of a tube according to this invention;
Fig. 4 is a graph showing permeated amounts of oxygen measured by the measurement system shown in Fig. 3;
Fig. 5 is a diagram showing the measurement results obtained using the measurement system shown in Fig. 3; and
Fig. 6 is an exploded view for explaining a tube according to a third embodiment of this invention.

Description of the Preferred Embodiment:

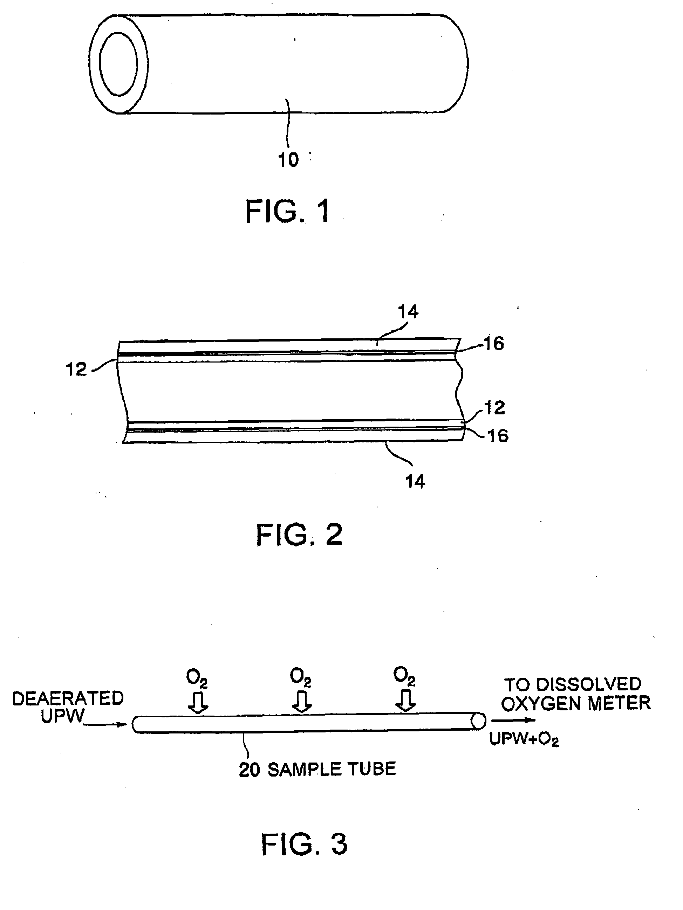

Referring to Fig. 1, a description will be given of a tube according to a first embodiment of this invention. An illustrated tube 10 is formed by a single layer of softened PVDF (polyvinylidene fluoride), that is, PVDF having been subjected to softening treatment. Normal PVDF has a flexural modulus of 2000Mpa and is not flexible and, therefore, a tube made of the normal PVDF is not suitable as a resin pipe that is subjected to processing such as bending. If the flexural modulus is 1800Mpa or less, it is flexible and can be practically used as a resin pipe.

In view of this, the illustrated PVDF tube 10 has been subjected to the softening treatment that weakens the intermolecular force by adding a perfluoromonomer. As a result, the softened PVDF tube 10 has a flexural modulus of 1200Mpa and thus is flexible, and therefore, when applied to a semiconductor manufacturing apparatus, a liquid crystal manufacturing apparatus, or the like, it can be freely bent for required piping,

Further, it has been found that the softened PVDF tube 10 has extremely excellent permeation preventing properties, i.e. an extremely low permeability coefficient, with respect to gas (oxygen, nitrogen) as compared with a tube made of PFA.

Referring to Fig. 2, a tube according to a second embodiment of this invention has a three-layer structure. The illustrated tube comprises a PFA tube 12 forming an inner layer and a nylon tube 14 forming an outer layer, wherein the PFA tube 12 and the nylon tube 14 are bonded together by an adhesive layer 16.

In this structure, the inner layer is formed by the PFA tube 12 made of the fluororesin adapted to suppress permeation of gas and being inactive and thus excellent in resistance to ultrapure water, chemical solutions, and gas. However, the permeation of gas (oxygen, nitrogen) cannot be fully prevented only by the PFA tube 12 and thus it is not possible to constitute a resin pipe having required properties using only the PFA tube 12.

Therefore, in the shown example, the outer layer is made of nylon which is not used in this type of semiconductor manufacturing apparatus and the nylon tube 14 and the PFA tube 12 are bonded together by the adhesive layer 16. Then, much better results are obtained as compared with the case of a PFA tube single layer. That is, since nylon is normally weak to alkali and easily discolored, it is considered unsuitable for a chemical solution transport pipe of a semiconductor manufacturing apparatus or the like, but it has been found through experiments by the present inventors that nylon is effective for reducing the oxygen permeability. Specifically, the PFA tube 12 having a thickness of 0.2mm and the nylon tube 14 having a thickness of 0.7mm are bonded together by the fluorine-based adhesive layer 16 having a thickness of 0.1mm.

For clarifying the foregoing fact, the permeability coefficient measurement results will be explained, At first, referring to Fig. 3, a description will be made about a permeability coefficient measurement system used in an experiment according to this invention. As shown in Fig. 3, through a deaeration filter (not shown), ultrapure water (UPW) (deaerated UPW) is supplied to a tube that is set as a sample tube 20. In the illustrated measurement system, the permeation of gas into the sample tube 20 is proportional to a contact area and a contact time between the gas and the sample tube 20, a pressure, and a temperature and is inversely proportional to a thickness. Therefore, the permeability (permeability coefficient) per unit time, unit pressure, and unit thickness is calculated by the following formula (3).

$$\text{Permeability Coefficient} =$$
$$\text{(Permeated Substance Amount} \times \text{Thickness of Sample) /}$$
$$\text{(Area of Sample} \times \text{Contact Time} \times \text{Permeated Substance Pressure Differential)}$$
$$= \text{(molecules} \cdot \text{cm) / (cm}^2 \cdot \text{sec} \cdot \text{Pa)} \qquad (3)$$

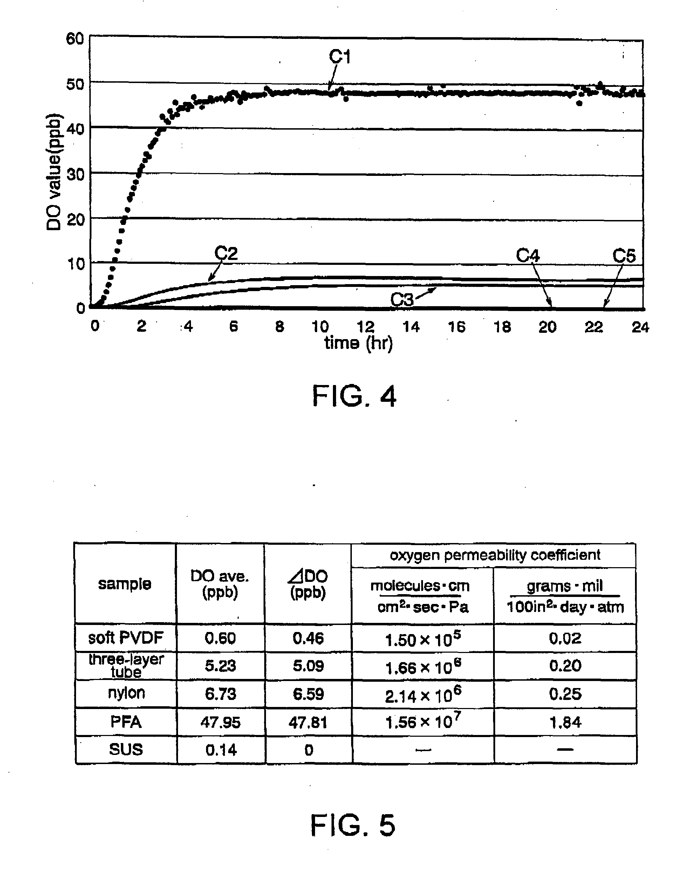

Fig. 4 shows the measurement results obtained using the measurement system shown in Fig. 3. Herein, each sample tube 20 has an outer diameter of 8mm, an inner diameter of 6mm, and a length of 1.5m. In the illustrated example, the measurement results are obtained by supplying 23°C UPW to the measurement system shown in Fig. 3 at a flow rate of 1 l/min and, herein, there are shown the measurement results of dissolved oxygen (DO) when an oxygen load of $3 \text{kgf/cm}^2$ is applied to the sample tube 20.

In Fig. 4, a characteristic curve C1 represents the permeability of a PFA single-layer tube and a characteristic curve C2 represents time-dependent changes (for 24 hours) in permeability of a nylon single-layer tube. Further, a characteristic curve C3 represents the permeability of a tube formed by stacking three layers, i.e. a layer of PFA (namely, PFA layer), an adhesive layer, and a nylon layer, like that shown in Fig. 2 and having an outer diameter of 8mm, an inner diameter of 6mm, and a length of 1.5m. A characteristic curve C4 represents the permeability of a softened PVDF tube like that shown in Fig. 1. Note that a characteristic curve C5 in Fig. 4 represents, for reference, the permeability of a stainless tube (SUS) incapable of flexible piping.

As clear from Fig. 4, it is understood that the softened PVDF tube (C4) and the three-layer tube (C3) each exhibit an oxygen permeability of 10ppb or less even after the lapse of 24 hours and thus have extremely excellent properties as compared with the PFA single-layer tube of which the oxygen permeability reaches near 50ppb. It is further understood that the oxygen permeability is the least in the case of the softened PVDF tube (C4) and then somewhat increases in the case of the three-layer tube (C3). Further, the softened PVDF tube exhibits a low oxygen permeability equivalent to that of the stainless tube (SUS).

Referring now to Fig. 5, there are shown measured values of oxygen permeability coefficients of the foregoing tubes. Herein, the average value during 16 to 20 hours is given as dissolved oxygen (DO) and, further, the change amount of dissolved oxygen is given as ΔDO assuming that the oxygen amount remaining in UPW is 0.14ppb. Further, there are also shown oxygen permeability coefficients calculated by the foregoing formulas (3) and (2).

As clear from Fig. 5, it is understood that, as compared with an oxygen permeability coefficient ($1.56 \times 10^7$: 1.84) of the PFA single-layer tube, the softened PVDF tube, the three-layer tube, and the nylon single-layer tube each have a much smaller oxygen permeability coefficient (i.e. less than the order of $10^7$). That is, the oxygen permeability coefficients of the softened PVDF tube, the three-layer tube, and the nylon single-layer tube are ($1.50 \times 10^5$ : 0.02), ($1.66 \times 10^6$ : 0.20), and ($2.14 \times 10^6$ : 0.25) (units omitted), respectively, and thus are smaller by one digit or more as compared with the PFA single-layer tube, and particularly, the softened PVDF tube has the oxygen permeability coefficient which is smaller by two digits than that of the PFA single-layer tube.

In the foregoing second embodiment, the description has been made about only such a tube that comprises the combination of the layer of nylon and the layer of PFA. However, it is possible to combine a layer of nylon or PVDF with another layer of fluororesin such as ETFE, PTFE, PVDC, or FEP. In this case, it is preferable to use, as an inner layer, a material having resistance to one of an alkaline aqueous solution, an acidic aqueous solution, a neutral aqueous solution, and an organic solvent.

Herein, according to experiments by the present inventors, a tube using softened PVDF or nylon-based resin has a problem in chemical resistance. Specifically, the softened PVDF tube is discolored by ammonia ($NH_3$). On the other hand, the nylon-based resin tube is discolored by an acidic solution.

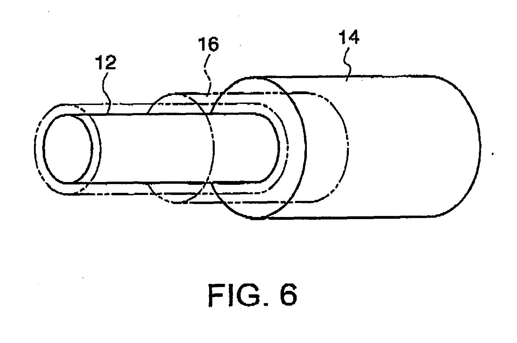

Referring to Fig. 6, a description will be made about a tube according to a third embodiment of this invention. The tube shown in Fig. 6 has a three-layer structure like the tube shown in Fig. 2 and is the same as the tube shown in Fig. 2 in that an inner layer (in this case, an innermost layer) is formed by a PFA tube 12. This embodiment differs from that of Fig. 2 in that the tube has an outer layer (in this case, an outermost layer) 14 made of nylon 6 or a nylon 6/12 copolymer, i.e. an outer layer 14 containing nylon 6 as a main component. The outer layer 14 containing nylon 6 as the main component and the PFA tube 12 are bonded together by a fluorine-based adhesive layer 16. The layer containing nylon 6 in this manner is strong and excellent in heat resistance, oil resistance, and chemical resistance. Therefore, using the layer containing nylon 6 as the outer layer, the chemical resistance of the outer layer can be improved. On the other hand, since the inner layer is made of PFA, it is possible to obtain an oxygen permeability coefficient equivalent to that of PVDF.

A tube was actually produced by forming an inner layer of PFA and an outer layer of nylon 6 and its oxygen permeability coefficient was measured by the same technique as that of Fig. 3, then it was 7 to $8 \times 10^4$ (molecules $\cdot$ cm/cm$^2$ $\cdot$ sec $\cdot$ Pa). Further, a tube was actually produced by forming an inner layer of PFA and an outer layer of a copolymer of nylon 6 and nylon 12 and its oxygen permeability coefficient was measured, then it was $1.3 \times 10^5$ (molecules $\cdot$ cm/cm$^2$ $\cdot$ sec $\cdot$ Pa).

These oxygen permeability coefficient values are substantially equivalent to the oxygen permeability coefficient ($1.50 \times 10^5$ molecules $\cdot$ cm/cm$^2$ $\cdot$ sec $\cdot$ Pa) of the softened PVDF.

Therefore, the tube having the layer containing nylon 6 as the outer layer can largely improve the oxygen permeability coefficient as compared with the case where the PFA layer is used alone.

A tube according to this invention is applicable not only to a pipe between containers, but also to a chemical solution supply pipe, an ultrapure water transport pipe, or the like.

**Claims**

1.  A resin pipe having an oxygen permeability coefficient of $5 \times 10^6$ (molecules $\cdot$ cm/cm$^2$ $\cdot$ sec $\cdot$ Pa) or less and a flexural modulus of 1800Mpa or less and containing a fluororesin.

2.  A resin pipe according to claim 1, wherein the oxygen permeability coefficient is $2 \times 10^6$ (molecules $\cdot$ cm/cm$^2$ $\cdot$ sec $\cdot$ Pa) or less.

3.  A resin pipe according to claim 1, wherein the resin pipe is integrally formed of two or more kinds of materials having different compositions.

4.  A resin pipe according to claim 2, wherein the resin pipe comprises a layer of softened PVDF.

5.  A resin pipe according to claim 1, wherein the resin pipe comprises a nylon layer.

6.  A resin pipe according to claim 3, wherein the resin pipe is formed by combination of a layer of softened PVDF or nylon and a layer of one of ETFE, PTFE, PVDC, FEP, and PFA.

7.  A resin pipe according to claim 1, wherein an inner surface of the resin pipe is made of a material having resistance to one of an alkaline aqueous solution, an acidic aqueous solution, a neutral aqueous solution, and an organic solvent.

8.  A resin pipe having an oxygen permeability coefficient of $5 \times 10^6$ (molecules $\cdot$ cm/cm$^2$ $\cdot$ sec $\cdot$ Pa) or less and a flexural modulus of 1800Mpa or less and adapted to transport a chemical solution or ultrapure water.

9.  A resin pipe according to claim 8, wherein the oxygen permeability coefficient is $2 \times 10^6$ (molecules $\cdot$ cm/cm$^2$ $\cdot$ sec $\cdot$ Pa) or less.

10. A resin pipe according to claim 8, wherein the resin pipe is adapted to transport the chemical solution or the ultrapure water for use in manufacturing an electronic device or an electronic component.

11. A resin pipe according to claim 8, wherein the resin pipe is formed by a layer of a single material or is integrally formed by layers of a plurality of materials having different compositions.

12. A resin pipe according to claim 11, wherein said layer of the single material is a layer of softened PVDF or a nylon layer.

**13.** A resin pipe according to claim 11, wherein the resin pipe is formed by combination of a layer of softened PVDF or nylon and a layer of one of ETFE, PTFE, PVDC, FEP, and PFA.

**14.** A resin pipe according to claim 8, wherein an inner surface of the resin pipe is made of a material having resistance to one of an alkaline aqueous solution, an acidic aqueous solution, a neutral aqueous solution, and an organic solvent.

**15.** A resin pipe having a multilayer structure, wherein the resin pipe comprises a layer of PFA and a layer of nylon arranged on an outer side of said PFA layer.

**16.** A resin pipe according to claim 15, wherein said outer layer contains nylon 6.

**17.** A resin pipe according to claim 15, wherein said outer layer is made of nylon 6 or a copolymer of the nylon 6 and nylon 12.

**18.** A resin pipe according to claim 15, wherein said PFA layer is the innermost layer.

**19.** A resin pipe according to claim 15, wherein said layer of nylon is the outermost layer.

FIG. 1

FIG. 2

FIG. 3

FIG. 4

| sample | DO ave. (ppb) | ΔDO (ppb) | oxygen permeability coefficient | |
|---|---|---|---|---|
| | | | molecules·cm / cm²·sec·Pa | grams·mil / 100in²·day·atm |
| soft PVDF | 0.60 | 0.46 | $1.50 \times 10^5$ | 0.02 |
| three-layer tube | 5.23 | 5.09 | $1.66 \times 10^6$ | 0.20 |
| nylon | 6.73 | 6.59 | $2.14 \times 10^6$ | 0.25 |
| PFA | 47.95 | 47.81 | $1.56 \times 10^7$ | 1.84 |
| SUS | 0.14 | 0 | — | — |

FIG. 5

12    16    14

FIG. 6

European Patent
Office

**EUROPEAN SEARCH REPORT**

Application Number

EP 07 00 6419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 053 864 A (HYBRITECH POLYMERS [US]) 22 November 2000 (2000-11-22) | 1-3,5-19 | INV. F16L9/12 B32B1/08 C08L27/16 |
| Y | * paragraphs [0001] - [0003], [0011], [0020] - [0022]; claims 1-3 * ----- | 4 | |
| X | EP 1 113 208 A2 (TOKAI RUBBER IND LTD [JP]) 4 July 2001 (2001-07-04) | 1-3,5-14 | |
| Y | * paragraphs [0001], [0034] - [0036]; figures * ----- | 4 | |
| X | US 6 293 312 B1 (STRIPE STANLEY E [US]) 25 September 2001 (2001-09-25) | 1-3,5-19 | |
| Y | * column 7, line 4 - line 15; claims 1,2,10 * ----- | 4 | |
| X | GB 2 332 258 A (INST FRANCAIS DU PETROL [FR]) 16 June 1999 (1999-06-16) * page 1, line 3 - page 6, line 34; claims 1-3 * ----- | 1-19 | |
| X | US 5 566 720 A (CHENEY CRAIG [US] ET AL) 22 October 1996 (1996-10-22) | 1-3,5-19 | TECHNICAL FIELDS SEARCHED (IPC) |
| Y | * column 4, line 57 - column 9, line 21; figure 2 * ----- | 4 | F16L B32B C08L |
| X | EP 1 510 326 A (JUNKOSHA INC [JP]) 2 March 2005 (2005-03-02) * abstract; tables 1-3 * ----- | 1,2, 8-11,14 | |
| Y | US 2001/055658 A1 (LASSON PIERRE [FR] ET AL LASSON PIERRE [BE] ET AL) 27 December 2001 (2001-12-27) * paragraphs [0001], [0007]; claims * ----- | 4 | |
| Y | US 6 376 586 B1 (PASCAL THIERRY [FR] ET AL) 23 April 2002 (2002-04-23) * column 1, line 11 - column 2, line 53 * ----- | 4 | |

-/--

The present search report has been drawn up for all claims

| Place of search | Date of completion of the search | Examiner |
|---|---|---|
| Munich | 22 June 2007 | Kopp, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 00 6419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 429 849 A (LASSON PIERRE [BE] ET AL) 4 July 1995 (1995-07-04) * column 1, line 9 - column 2, line 64; table 5 * ----- | 4 | |

TECHNICAL FIELDS SEARCHED (IPC)

The present search report has been drawn up for all claims

| Place of search | Date of completion of the search | Examiner |
|---|---|---|
| Munich | 22 June 2007 | Kopp, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 840 433 A1**

## ANNEX TO THE EUROPEAN SEARCH REPORT
## ON EUROPEAN PATENT APPLICATION NO.

EP 07 00 6419

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2007

| Patent document cited in search report | | Publication date | Patent family member(s) | | Publication date |
|---|---|---|---|---|---|
| EP 1053864 | A | 22-11-2000 | AU | 724142 B1 | 14-09-2000 |
| | | | BR | 0002428 A | 02-01-2001 |
| | | | CA | 2288454 A1 | 19-11-2000 |
| | | | CN | 1274640 A | 29-11-2000 |
| | | | JP | 2000337564 A | 05-12-2000 |
| EP 1113208 | A2 | 04-07-2001 | DE | 60006777 D1 | 08-01-2004 |
| | | | US | 2001006712 A1 | 05-07-2001 |
| US 6293312 | B1 | 25-09-2001 | AR | 029525 A1 | 02-07-2003 |
| | | | AU | 6511401 A | 03-12-2001 |
| | | | BR | 0111066 A | 03-06-2003 |
| | | | CA | 2408151 A1 | 29-11-2001 |
| | | | EP | 1283967 A1 | 19-02-2003 |
| | | | JP | 2003534508 T | 18-11-2003 |
| | | | MX | PA02011469 A | 25-04-2003 |
| | | | WO | 0190625 A1 | 29-11-2001 |
| | | | US | 2002043330 A1 | 18-04-2002 |
| GB 2332258 | A | 16-06-1999 | AU | 745853 B2 | 11-04-2002 |
| | | | AU | 9611498 A | 01-07-1999 |
| | | | BR | 9805295 A | 14-12-1999 |
| | | | FR | 2772108 A1 | 11-06-1999 |
| | | | NO | 985760 A | 11-06-1999 |
| | | | US | 6455118 B1 | 24-09-2002 |
| US 5566720 | A | 22-10-1996 | AT | 217693 T | 15-06-2002 |
| | | | BR | 9606830 A | 30-12-1997 |
| | | | DE | 69621223 D1 | 20-06-2002 |
| | | | DE | 69621223 T2 | 29-08-2002 |
| | | | EP | 0804700 A1 | 05-11-1997 |
| | | | JP | 3073773 B2 | 07-08-2000 |
| | | | JP | 10504369 T | 28-04-1998 |
| | | | WO | 9621820 A1 | 18-07-1996 |
| EP 1510326 | A | 02-03-2005 | CN | 1839029 A | 27-09-2006 |
| | | | JP | 2005067079 A | 17-03-2005 |
| | | | WO | 2005018913 A1 | 03-03-2005 |
| | | | KR | 20060087526 A | 02-08-2006 |
| | | | US | 2005048240 A1 | 03-03-2005 |
| US 2001055658 | A1 | 27-12-2001 | NONE | | |
| US 6376586 | B1 | 23-04-2002 | AT | 245674 T | 15-08-2003 |
| | | | AU | 734733 B2 | 21-06-2001 |
| | | | AU | 8624898 A | 30-12-1998 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 07 00 6419

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2007

| Patent document cited in search report | | Publication date | Patent family member(s) | | Publication date |
|---|---|---|---|---|---|
| US 6376586 | B1 | | CA | 2294751 A1 | 17-12-1998 |
| | | | CN | 1265694 A | 06-09-2000 |
| | | | DE | 69816529 D1 | 28-08-2003 |
| | | | DK | 884358 T3 | 10-11-2003 |
| | | | WO | 9856855 A1 | 17-12-1998 |
| | | | EP | 0884358 A1 | 16-12-1998 |
| | | | NO | 996576 A | 30-12-1999 |
| | | | RU | 2199559 C2 | 27-02-2003 |
| US 5429849 | A | 04-07-1995 | BE | 1006615 A3 | 03-11-1994 |
| | | | DE | 69434713 T2 | 16-05-2007 |
| | | | EP | 0608940 A1 | 03-08-1994 |
| | | | JP | 6299029 A | 25-10-1994 |
| | | | JP | 2005120369 A | 12-05-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004322387 A
- JP 2006112507 A